**Europäisches Patentamt**

**European Patent Office**

**Office européen des brevets**

(19)

(11) Veröffentlichungsnummer: **0 080 583**
**A1**

(12) # EUROPÄISCHE PATENTANMELDUNG

(21) Anmeldenummer: 82109248.3

(22) Anmeldetag: 07.10.82

(51) Int. Cl.³: **B 29 B 5/04**

(30) Priorität: 30.11.81 DE 3147417

(43) Veröffentlichungstag der Anmeldung:
08.06.83 Patentblatt 83/23

(84) Benannte Vertragsstaaten:
BE CH DE FR GB IT LI

(71) Anmelder: Battenfeld-EKK Extrusionstechnik GmbH
Hunscheidstrasse 154
D-4630 Bochum(DE)

(72) Erfinder: Rust, Harald
Löwenzahnweg 11
D-4630 Bochum(DE)

(74) Vertreter: Müller, Gerd et al,
Patentanwälte F.W. Hemmerich Gerd Müller, Dipl.-Ing.
D. Grosse Felix Pollmeier Hammerstrasse 2
D-5900 Siegen 1(DE)

(54) Vorrichtung zum Vorwärmen und/oder Plastifizieren von pulverförmigem thermoplastischem Kunststoff.

(57) Die Erfindung betrifft eine Vorrichtung zum Vorwärmen und/oder Plastifizieren von pulverförmigem, thermoplastischem Kunststoff, insbesondere von mit Zusatzstoffen versehenem PCV-Pulver oder Polyolefinen wie PS, PP oder PE, die einen Materialaufnahmetrichter (1), ein Misch- und Rührwerk (3), eine Dosierschnecke (8) sowie eine Planetenwalzenextruder (10) mit vorgeordneter Füllschnecke aufweist. Um den Verschleiß des Planetenwalzenextruders (10) zu mindern, werden die Füllschnecke (8) und der Planetenwalzenextruder (10) mit jeweils senkrechter Achse axial unterhalb des Aufnahmetrichters (1) angeordnet und an den Misch- und Rührwerksantrieb angeschlossen. Die Füllschnecke (8) wird hiebei zweckmäßig mehrgängig symmetrisch ausgebildet.

EP 0 080 583 A1

./...

PATENTANWALTE   F.W. HEMMERICH · GERD MÜLLER · D. GROSSE · F. POLLMEIER

30. November 1981                    ko.ni                    61 116

Battenfeld-EKK Extrusionstechnik GmbH
Hunscheidstraße 154, 4630 Bochum

0080583

Vorrichtung zum Vorwärmen und/oder Plastifizieren
von pulverförmigem thermoplastischem Kunststoff

Die Erfindung bezieht sich auf eine Vorrichtung zum Vorwärmen und/oder Plastifizieren von pulverförmigem thermoplastischem Kunststoff, insbesondere von mit Zusatzstoffen
versehenem PVC-Pulver oder Polyolefinen wie PS, PP oder PE,
bestehend aus einem Materialaufnahmetrichter mit einem Misch-
und Rührwerk und einer Dosierschnecke sowie aus einem Planetenwalzenextruder mit vorgeordneter Füllschnecke.

Zum Vorwärmen und/oder Plastifizieren von mit Zuschlagstoffen,
wie Stabilisatoren, Pigmenten oder dergleichen, versehenem
PVC-Pulver oder Polyolefinen wie PS, PP oder PE, ist eine Vorrichtung bekannt, die aus einem das zu verarbeitende, pulverförmige Material aufnehmenden Trichter besteht, in dem ein
mit einem Antrieb verbundenes Misch- und Rührwerk angeordnet
ist. Im Hals bzw. Auslauf des Trichters ist mit senkrechter
Achse eine sogenannte Stopfschnecke vorgesehen, die mit dem
Antrieb des Misch- und Rührwerkes verbunden ist. Dabei hat
die Stopfschnecke die Aufgabe, das in dem Trichter befindliche Material dosiert an eine Füllschnecke abzugeben. Die
Füllschnecke ist mit horizontaler Achse unterhalb der Stopf-
bzw. Dosierschnecke angeordnet und speist ihrerseits einen
Planetenwalzenextruder, der koaxial zur Füllschnecke vorgesehen ist. Während die die Dosierschnecke und die Füllschnekke umgebenden Wandungen gekühlt sind, so daß in diesem Bereich also nur eine reine Förderung des pulverförmigen Materiales stattfindet, wird der Planetenwalzenextruder beheizt, so daß hier das pulverförmige Mateiral zumindest vorerwärmt, meist aber vorplastifiziert oder plastifiziert wird.

Dabei ist der Füllschnecke und dem Planetenwalzenextruder
ein besonderer, vom Misch- und Rührwerksantrieb getrennter
Antrieb zugeordnet. Von dem Planetenwalzenextruder gelangt
das Material, meist in Agglomeratform, über eine Umlenk-
und Entlüftungskammer zu einem Schneckenextruder, in dem
das Material plastifiziert bzw. vollständig plastifiziert
wird. Das den Schneckenextruder verlassende Material wird
entweder granuliert oder direkt zu Formteilen verarbeitet.

Während die Dosierschnecke aus dem Trichter noch zentral beaufschlagt wird, tritt das die Dosierschnecke verlassende, pulverförmige Material radial von oben in die horizontale Füllschnecke. Infolge der Schwerkraft fällt das Material dann bei
meist nicht voll gefüllter Füllschnecke in den unteren Bereich
derselben, von wo aus es dann in den Planetenwalzenextruder geschoben wird. Das bedeutet, daß der Planetenwalzenextruder nur
in seinem unteren Bereich, also nicht gleichförmig beschickt
wird. Wenn sich auch hier beim weiteren Transport des Materials
allmählich eine gleichmäßige Beaufschlagung einspielt, so
ist doch der Anfangsbereich des Planetenwalzenextruders stark
einseitig beansprucht, was einen unerwünscht hohen Verschleiß
ergibt. Durch die horizontale Anordnung der Füllschnecke und
des Planetenwalzenextruders bedingt ergibt sich darüber hinaus
eine große Baulänge der Vorrichtung, was eine große Aufstellfläche erforderlich macht. Um den Planetenwalzenextruder und
die Füllschnecke reinigen und gegebenenfalls instand setzen
zu können, sind dieselben auf einem besonderen Rahmengestell
mit Fahrwerk angebracht, wodurch sich der Aufwand für die Herstellung der Vorrichtung erhöht.

Der Erfindung liegt deshalb die Aufgabe zugrunde, eine Vorrichtung der eingangs beschriebenen Gattung so auszubilden,
daß der Verschleiß des Planetenwalzenextruders herabgesetzt
und der Aufbau der Vorrichtung vereinfacht wird. Gleichzeitig
soll der Platzbedarf für das Aufstellen der Vorrichtung verringert werden.

Zur Lösung dieser Aufgabe wird bei einer Vorrichtung gemäß dem Oberbegriff des Anspruches 1 vorgeschlagen, daß die Füllschnecke und der Planetenwalzenextruder mit jeweils senkrechter Achse axial unterhalb des Aufnahmetrichters angeordnet und an den Misch- und Rührwerksantrieb angeschlossen sind. Durch diese Ausbildung ist sichergestellt, daß sich die Füllschnecke durch die Schwerkraft des Materials gleichmäßig füllt und keinerlei Unsymmetrien auftreten. Dies stellt aber eine gleichmäßige Beladung des Planetenwalzenextruders sicher, so daß derselbe ohne ihn überbeanspruchende einseitige Radialkräfte betreibbar ist und hohe Standzeiten erreicht. Ein einseitiger Verschleiß tritt nicht mehr auf.

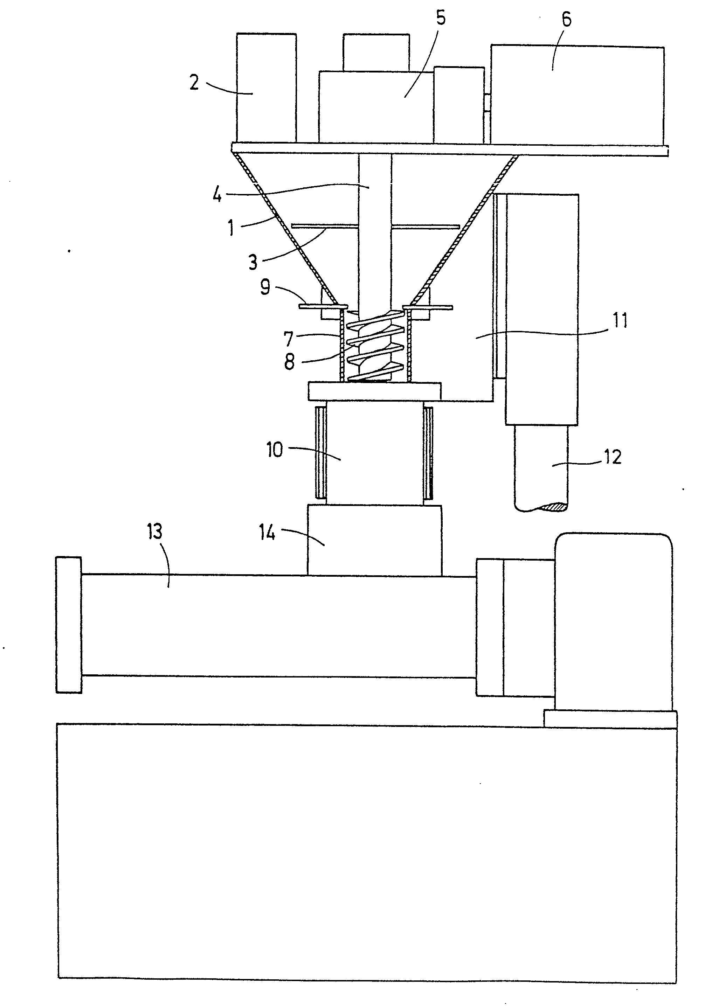

In vorteilhafter Weise ist es möglich, die Füllschnecke direkt im Auslauf des Aufnahmetrichters anzuordnen, so daß dieselbe gleichzeitig die Dosier- bzw. Stopfschnecke bildet. Eine besondere Dosierschnecke ist dann nicht mehr erforderlich. Bedarfsweise kann der Füllschnecke ein Dosierschieber zugeordnet sein, der entweder oberhalb oder unterhalb der Füllschnecke angeordnet ist. Um jegliche unsymmetrische Belastung des Planetenwalzextruders auszuschließen, ist die Füllschnecke symmetrisch mehrgängig, also mindestens zweigängig, ausgebildet, auch wenn die Zeichnung zur Vereinfachung der Darstellung nur eine eingängige Schnecke zeigt.

Der Planetenwalzenextruder, die Füllschnecke und der Aufnahmetrichter mit dem Misch- und Rührwerksantrieb sind an einem um eine senkrechte Achse schwenkbaren Arm befestigt. Dies erleichtert die Reinigung und Reparatur der Vorrichtung und gibt darüber hinaus die Möglichkeit, das beim Anlauf aus dem Planetenwalzenextruder austretende Material zunächst in einen danebenstehenden Behälter einfließen zu lassen, bis beispielsweise die Aufheizung abgeschlossen ist und einwandfrei homogenes Material austritt. Das bisher erforderliche Rahmengestell mit dem Fahrwerk kann entfallen.

Die Erfindung wird nachfolgend anhand eines in einer Zeichnung dargestellten Ausführungsbeispieles näher erläutert.

In dieser Zeichnung ist eine Vorrichtung zum Wärmen und/oder Vorplastifizieren von pulverförmigem, thermoplastischem Kunststoff in vereinfachter Weise gezeigt,die einen Trichter 1 zur Aufnahme des zu verarbeitenden Materials aufweist. Über einen Metallabscheider 2 wird das Material, beispielsweise PVC-Pulver mit Zusatzstoffen,in den Trichter 1 eingefüllt. In dem Trichter 1 ist ein nur angedeutetes Misch- und Rührwerkzeug 3 vorgesehen, das von einer Welle 4 aufgenommen wird. Die Welle 4 ist an ein Getriebe 5 mit Antriebsmotor 6 angeschlossen. Der untere Bereich des Trichters 1 geht in einen zylindrischen Auslauf 7 über, durch den sich ebenfalls die Welle 4 erstreckt. In diesem Bereich nimmt die Welle 4 eine zweigängige Füllschnecke 8 auf, die somit ebenfalls vom Motor 6 mit Getriebe 5 angetrieben wird. Im Übergangsbereich vom Trichter 1 zum Auslauf 7 ist ein Dosierschieber 9 eingebaut, der beispielsweise symmetrisch, zweiseitig ausgebildet ist. Über diesen Dosierschieber 9 kann die in die Füllschnecke 8 einlaufende Materialmenge dosiert werden. Der Mantel des Auslaufes 7 kann mit einer an sich bekannten, nicht näher dargestellten Kühlung ausgerüstet sein.

An das freie Ende des Auslaufes 7 schließt sich ein nur angedeuteter Planetenwalzenextruder 10 an, der ebenfalls durch die Welle 4 angetrieben wird. Auch die Mittelachse dieses Planetenwalzenextruders 10 verläuft senkrecht und koaxial zum Trichter 1. Zur einfachen Temperierung des Planetenwalzenextruders 10 kann derselbe mit einer Elektroheizung versehen sein. Sowohl der Trichter 1 mit dem Auslauf 7 und der Füllschnecke 8 als auch der Planetenwalzenextruder 10 werden von einem Arm 11 getragen, der an einer ortsfesten Säule 12 schwenkbar gehalten ist. Dadurch können diese Teile von einem nicht näher gezeichneten Schneckenextruder 13 abgeschwenkt werden, der sich mit einer Entgasungskammer 14 unter dem Planetenwalzenextruder 10 anschließt.

Battenfeld-EKK Extrusionstechnik GmbH
Hunscheidstraße 154, 4630 Bochum


Patentansprüche


1. Vorrichtung zum Vorwärmen und/oder Plastifizieren von
   pulverförmigem, thermoplastischem Kunststoff, insbesondere
   von mit Zusatzstoffen versehenem PVC-Pulver oder Polyolefinen wie PS, PP oder PE, bestehend aus einem Materialaufnahmetrichter mit einem Misch- und Rührwerk und einer Dosierschnecke sowie aus einem Planetenwalzenextruder mit vorgeordneter Füllschnecke,
   d a d u r c h   g e k e n n z e i c h n e t ,
   daß die Füllschnecke (8) und der Planetenwalzenextruder
   (10) mit jeweils senkrechter Achse axial unterhalb des
   Aufnahmetrichters (1) angeordnet und an den Misch- und
   Rührwerksantrieb (5, 6) angeschlossen sind.


2. Vorrichtung nach Anspruch 1,
   d a d u r c h   g e k e n n z e i c h n e t ,
   daß die Füllschnecke (8) im Auslauf (7) des Aufnahmetrichters
   (1) angeordnet ist und die Dosierschnecke bildet.


3. Vorrichtung nach Anspruch 2,
   d a d u r c h   g e k e n n z e i c h n e t ,
   daß der Füllschnecke (8) ein Dosierschieber (9) zugeordnet
   ist.


4. Vorrichtung nach Anspruch 3,
   d a d u r c h   g e k e n n z e i c h n e t ,
   daß der Dosierschieber zwischen der Füllschnecke und dem
   Planetenwalzenextruder angeordnet ist.

5. Vorrichtung nach Anspruch 3,
   d a d u r c h   g e k e n n z e i c h n e t ,
   daß der Dosierschieber (9) oberhalb der Füllschnecke (8)
   angeordnet ist.

6. Vorrichtung nach mindestens einem der Ansprüche 1 bis 5,
   d a d u r c h   g e k e n n z e i c h n e t ,
   daß die Füllschnecke (8) mehrgängig symmetrisch ausgebildet
   ist.

7. Vorrichtung nach mindestens einem der Ansprüche 1 bis 6,
   d a d u r c h   g e k e n n z e i c h n e t ,
   daß der Planetenwalzenextruder (10), die Füllschnecke (8)
   und der Aufnahmetrichter (1) mit dem Misch- und Rührwerksantrieb (5,6) an einem um eine senkrechte Achse (12) schwenkbaren Arm (11) befestigt sind.

0080583

| | DOCUMENTS CONSIDERED TO BE RELEVANT | | EP 82109248.3 |
|---|---|---|---|

| Category | Citation of document with indication, where appropriate, of relevant passages | Relevant to claim | CLASSIFICATION OF THE APPLICATION (Int. Cl. ³) |
|---|---|---|---|
| A | DE - A1 - 2 924 318 (HERMANN BERSTORFF) <br> * Gesamt * <br> -- | 1 | B 29 B 5/04 |
| A | DE - B - 1 679 807 (BUSS AG) <br> * Gesamt * <br> ---- | | |

TECHNICAL FIELDS
SEARCHED (Int. Cl. ³)

B 29 B
B 29 F

The present search report has been drawn up for all claims

| Place of search | Date of completion of the search | Examiner |
|---|---|---|
| VIENNA | 17-02-1983 | BAUMGARTNER |